## Europäisches Patentamt

## European Patent Office

## Office européen des brevets

(11) Veröffentlichungsnummer: **0 185 287**
**A1**

(12) # EUROPÄISCHE PATENTANMELDUNG

(21) Anmeldenummer: 85115623.2

(22) Anmeldetag: 09.12.85

(51) Int. Cl.⁴: **A 61 C 13/20**
**B 22 D 13/06**

(30) Priorität: 13.12.84 DE 3445424

(43) Veröffentlichungstag der Anmeldung:
25.06.86 Patentblatt 86/26

(84) Benannte Vertragsstaaten:
DE FR GB IT SE

(71) Anmelder: Körner, Rudi
Elisabethenstrasse 41
D-7080 Aalen-Unterkochen(DE)

(72) Erfinder: Körner, Rudi
Elisabethenstrasse 41
D-7080 Aalen-Unterkochen(DE)

(74) Vertreter: Lorenz, Werner, Dipl.-Ing.
Fasanenstrasse 7
D-7920 Heidenheim(DE)

(54) Vorrichtung zum Giessen von Zahnersatzmaterialien.

(57) Eine Vorrichtung zum Gießen von Zahnersatzmaterialien, insbesondere von Gold, aus einem Schmelzbehälter (4)
in eine in einem Vorwärmeofen (1) vorgewärmte Muffel (5).
Der Schmelzbehälter (4) ist zusammen mit der an diesen
über eine Verbindungseinrichtung angesetzten Muffel (5) an
einem während des Gießvorganges rotierenden Schleuderarm (2) einer Schleudereinrichtung angeordnet. Auf einer
gemeinsamen Baueinheit (8) sind der Vorwärmeofen (1) und
die Verbindungseinrichtung (9,13) so zueinander angeordnet, daß zum Transport der Muffel (5) und zu dessen
Befestigung an einer Verbindungseinrichtung ein Manipulatorarm (12) einsetzbar ist, der nur eine Verschiebebewegung
in einer Ebene durchführt und der an der Muffel (5) eingreift.

Fig.2

Croydon Printing Company Ltd

EP 0 185 287 A1

**0185287**

**PATENTANWALT**

**DIPL.-ING. WERNER LORENZ**

Fasanenstr. 7

7920 Heidenheim

16.09.1985 hf

Akte: KOE 1255F

Anmelder:

=========

Rudi Körner

Elisabethenstr. 41

7080 Aalen-Unterkochen

## Vorrichtung zum Gießen von Zahnersatzmaterialien

Die Erfindung betrifft eine Vorrichtung zum Gießen von Zahnersatzmaterialien, insbesondere von Gold, aus einem Schmelzbehälter in eine in einem Vorwärmeofen vorgewärmte Muffel, wobei der Schmelzbehälter zusammen mit der an diesen über eine Verbindungseinrichtung angesetzten Muffel an einem während des Gießvorganges rotierenden Schleuderarm einer Schleudereinrichtung angeordnet ist.

Zur Herstellung von Zahnersatz, z.B. aus Gold, dient eine Muffel, in der ein Hohlraum mit der Negativform angeordnet ist. In einem Schmelzbehälter wird durch eine Elektroheizung z.B. das Gold zum Schmelzen gebracht. Der Schmelzbehälter befindet sich auf einem Schleuderarm, der zum Gießen des

-...-

Goldes in Rotation versetzt wird. Die Muffel wird in einem danebenstehenden Vorwärmeofen vorgewärmt und nach Erreichen des Schmelzpunktes des Goldes in dem Schmelzbehälter aus dem Vorwärmeofen mit einer Zange herausgenommen und mit dem Schmelzbehälter verbunden. Anschließend erfolgt die Rotation des Schmelzbehälters, wodurch aufgrund der Zentrifugalkraft das geschmolzene Gold in die außen angesetzte Muffel läuft und die Negativform in der Muffel ausfüllt.

Statt einem Füllen der Muffel mit Hilfe der Zentrifugalkraft ist es auch bereits bekannt, hierfür Druck zu verwenden. In diesem Falle wird die Muffel druckdicht mit dem Schmelzbehälter verbunden, der sich in einem geschlossenen Raum befindet. Gibt man nun Druckluft in diesen Raum, so wird das geschmolzene Gold aus dem Schmelzbehälter in die Muffel verdrängt.

Nachteilig bei den bekannten Verfahren ist jedoch, daß sie relativ zeitaufwendig sind und mehrere Handgriffe von Bedienungspersonen erfordern. So muß z.B. die vorgewärmte Muffel mit einer Zange aus dem Ofen geholt werden. Ein weiteres Problem liegt in dem Vergießen selbst. Wenn dieser nicht genau durchgeführt wird, sind zeitaufwendige und damit teure Nacharbeiten erforderlich.

Der vorliegenden Erfindung liegt daher die Aufgabe zugrunde, eine Vorrichtung zum Gießen von Zahnersatzmaterialien zu schaffen, dessen Bedienung leichter ist, wobei auch ein genauer Guß erzeugt werden soll.

Erfindungsgemäß wird diese Aufgabe dadurch gelöst, daß auf einer gemeinsamen Baueinheit der Vorwärmeofen und die Verbindungseinrichtung so nebeneinander angeordnet sind, daß zum Transport der Muffel und zu deren Befestigung an der Verbindungseinrichtung ein betätigbarer Manipulatorarm vorgesehen ist, der nur eine Verschiebebewegung in einer Ebene durchführt.

Während bisher der Vorwärmeofen in keiner genauen räumlichen Beziehung zu der Schleudereinrichtung mit dem Schleuderarm stand, werden diese beiden Teile nunmehr in einer gemeinsamen Baueinheit angeordnet und so zueinander ausgerichtet, daß die Muffel durch einen Manipulatorarm auf einfache Weise aus dem Vorwärmeofen herausgenommen und mit der Verbindungseinrichtung an dem Schmelzbehälter verbunden werden kann.

Wenn sich die Verbindungseinrichtung und der Vorwärmeofen auf dem gleichen Niveau bzw. auf der gleichen Ebene befinden, ist eine Verschiebung des Manipulatorarmes nur in einer Ebene notwendig, womit dieser relativ einfach im Aufbau gehalten werden kann. Hierzu ist es z.B. lediglich erforderlich, die Auflagefläche in dem Vorwärmeofen im wesentlichen

0185287

auf der gleichen Höhe wie die Verbindungseinrichtung zu setzen. In einfacher Weise ist der Manipulatorarm an dem Schleuderarm befestigt und über einen Pneumatikzylinder betätigbar.

Eine sehr vorteilhafte und nicht naheliegende Weiterbildung der Erfindung besteht darin, daß der Schleuderarm wenigstens in dem Bereich, in dem der Schmelzbehälter im Inneren angeordnet ist, als druckdicht verschließbarer Arm ausgebildet ist, wobei die Muffel druckdicht mit dem Schmelzbehälter verbindbar ist.

Durch diese Ausgestaltung kann z.B. ein Vakuumdruckguß durchgeführt werden. Damit lassen sich bessere Gußergebnisse erzielen, weil durch eine vorherige Evakuierung die einschießende Schmelze, die sonst vorhandene Luft nicht komprimieren muß. Auf diese Weise wird der Guß wesentlich genauer und notwendige Nacharbeiten können auf ein Minimum reduziert werden.

Zur Bedienungserleichterung und zur schnelleren Herstellung der Zahnformen ist es von Vorteil, wenn im Inneren des Schleuderarmes ein Vorratsmagazin für abgepaßtes Zahnersatzmaterial angeordnet ist.

Während bisher stets nur eine abgepaßte Menge von Zahnersatzmaterialien zur Verfügung stand, die in den Schmelzbehälter eingebracht worden ist, wird nun erfindungsgemäß ein Vorratsmagazin verwendet, in welchem mehrere abgepaßte Stücke liegen. Auf diese Weise können hintereinander mehrere Gußvorgänge durchgeführt werden.

Die Ausbildung des Vorratsmagazines kann beliebig sein. So kann z.B. hierfür ein Drehmagazin mit über den Umfang verteilten Kammern mit Ausschubstempeln vorhanden sein.

Bei einem kombinierten Schleuder-/Druckgußverfahren ist es lediglich erforderlich, daß sich das Vorratsmagazin im Inneren des Schleuderarmes befindet. In diesem Falle ist nur dafür zu sorgen, daß es zum Nachfüllen leicht zugänglich ist. Hierzu kann z.B. ein Deckel in dem Gehäuse des Schleuderarmes dienen. Gleiches gilt auch für den Schmelzbehälter.

Statt einem im Inneren des Schleuderarmes angeordneten Vorratsmagazin kann man auch umgekehrt die Schmelzbehälter auswechselbar ausbilden. In diesem Falle befindet sich ein Magazin mit mehreren Schmelzbehältern, in denen sich bereits jeweils die entsprechende Menge des zu schmelzenden Gutes befindet, außerhalb des Schleuderarmes an einem feststehenden Teil. Zum Wechsel - nach einem Schmelzvorgang - wird von außen ein neuer Schmelzbehälter in den Schleuderarm so eingeschoben, daß die Heizeinrichtung diesen erhitzen kann.

- ... -

Gleichzeitig wird dann der alte Schmelzbehälter ausgeschoben oder ausgeworfen.

Der Manipulatorarm kann an dem Schleuderarm befestigt sein und über Pneumatikzylinder bewegt werden.

In erfindungsgemäßer Ausgestaltung kann ein Pneumatikzylinder für die horizontale Verschiebung des Manipulatorarmes an dem Schleuderarm und ein weiterer Pneumatikzylinder an einer Greifeinrichtung für die Muffel angeordnet sein. Diese Ausgestaltung ist relativ einfach und damit kostengünstig.

Die Greifeinrichtung kann auf verschiedene Weise ausgebildet sein. So kann sie z.B. eine Art Zange mit zwei Klemmhebeln sein, zwischen denen der Pneumatikzylinder angeordnet ist. Der Pneumatikzylinder wird dabei im allgemeinen zur Vereinfachung doppelt wirkend sein und damit die beiden Klemmhebel synchron zu der dazwischenliegenden Mittelebene bewegen.

Die Klemmhebel können dabei mit Haltegliedern versehen sein, die mit an der zu transportierenden Muffel angeordneten Gegenglieder zusammenarbeiten.

Die Ausgestaltung der Halteglieder und der Gegenglieder ist ebenfalls auf verschiedene Weise möglich.

Eine einfache und sehr wirksame Transportverbindung besteht darin, daß die Halteglieder Klemmbacken und die Gegenglieder an die Außenkontur der Klemmbacken angepaßte Ansätze an der Umfangswand der Muffel sind. Bei einer Ausgestaltung der Klemmbacken als Bogensegment wird man die Gegenglieder als entsprechenden Hohlkreisbogen ausbilden. Auf der Vorderseite kann der Hohlkreisbogen ggf. noch einen Anschlag aufweisen, der radial von der Muffel absteht, damit während des Schleudervorganges die Muffel sicher festgehalten ist. In diesem Falle kann nämlich die Greifeinrichtung mit den beiden Klemmhebeln gleichzeitig zur druckdichten Verbindung mit dem Schmelzbehälter dienen. Hierzu ist es lediglich erforderlich, daß die entsprechenden Teile genügend stabil ausgebildet sind, damit die auftretenden hohen Zentrifugelkräfte sicher aufgefangen werden können.

Eine weitere sehr vorteilhafte Ausgestaltung der Erfindung besteht darin, daß zum Transport von Muffeln mit unterschiedlichen Durchmessern in dem Vorwärmeofen ein Einsatz mit unterschiedlich hohen Auflageflächen für die Muffeln derart angeordnet ist, daß sich alle Längsachsen der Muffeln auf dem gleichen Niveau befinden.

Auf diese Weise können problemlos Muffeln mit unterschiedlichen Durchmessern bzw. unterschiedlicher Größe verarbeitet werden, wobei der Manipulatorarm trotzdem stets auf dem gleichen Niveau verbleibt und damit einfach ausgestaltet sein kann.

Von Vorteil ist es auch, wenn die Auflageflächen auf einem Kreisbogen liegen, dessen Mittelpunkt wenigstens annähernd im Bereich der Drehachse des Schleuderarmes liegt.

Auf diese Weise wird erreicht, daß mehrere Muffeln in dem Ofen nebeneinander angeordnet werden können, wobei diese jedoch entsprechend zur Längsachse des Schleuderarmes mit dem daran befestigten Manipulatorarm ausgebildet sind und damit durch eine einfache geradlinige Bewegung aus dem Vorwärmeofen genommen werden können.

Nachfolgend ist anhand der Zeichnung ein Ausführungsbeispiel der Erfindung, aus dem weitere erfindungsgemäße Merkmale hervorgehen, prinzipmäßig näher beschrieben.

Es zeigt:

Fig. 1    eine Draufsicht auf die erfindungsgemäße Vorrichtung,

Fig. 2    eine Seitenansicht auf die Vorrichtung nach der Fig. 1.

Fig. 3    eine vergrößerte Ansicht der Greifeinrichtung

Fig. 4    Ausschnittsvergrößerung eines Teiles des Vorwärme-
          ofens.

Die Hauptbestandteile der Vorrichtung zum Gießen von Zahnersatzmaterialien sind allgemein bekannt, weshalb diese nachfolgend nur kurz beschrieben sind. Dies gilt insbesondere
für einen Vorwärmeofen 1, einen Schleuderarm 2 mit einer Antriebseinrichtung 3 und einen Schmelzbehälter 4.

Der Vorwärmeofen 1 dient zum Anwärmen von Muffeln 5, die im
Inneren eine Hohlform für Kronen, Brücken u.dgl. besitzen.

Der Schmelzbehälter 4 besteht im allgemeinen aus einem Kohletiegel, der über eine elektrische Widerstandsheizung erwärmt wird. Im Inneren des Kohletiegels befindet sich das zu
schmelzende Zahnersatzmaterial, z.B. Gold. Der Schleuderarm
2 ist als geschlossener druckdichter Kasten ausgebildet, wobei sich der Schmelzbehälter 4 in seinem Inneren 6 befindet.
Ebenfalls im Inneren 6 des Schleuderarmes 2 ist ein Vorratsmagazin 7 angeordnet. Das Vorratsmagazin 7 ist ein Drehmagazin mit mehreren, am Umfang verteilten Kammern mit Ausschubstempeln, die das zu schmelzende Gold für einen Gießvorgang in den Schmelzbehälter 4 einschieben.

-...-

Der Vorwärmeofen 1 und der Schleuderarm 2 mit der Antriebseinrichtung 3 sind in einer gemeinsamen Baueinheit 8 angeordnet. Ein Ende des Schleuderarmes 2 ist mit einer Verbindungseinrichtung 9 versehen, während das andere Ende zum Gewichtsausgleich ein Gegengewicht 10 aufweist.

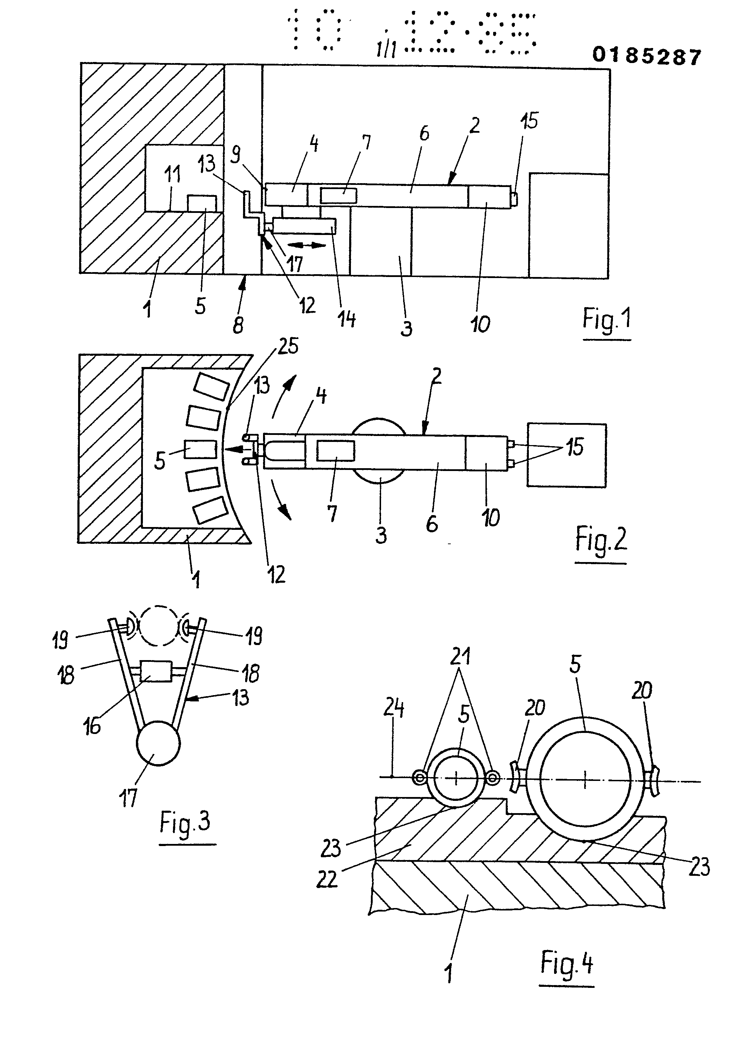

Wie aus der Fig. 2 ersichtlich ist, befindet sich die Auflagefläche 11 des Vorwärmeofens 1 auf der gleichen Höhe wie
die Verbindungseinrichtung 9. Ein Manipulatorarm 12 mit
Greifeinrichtungen 13 ist an dem Ende des Förderarmes 2 angeordnet, an dem sich auch der Schmelzbehälter 4 befindet. Zur
Betätigung des Manipulatorarmes 12 dient ein Pneumatikzylinder 14. Durch eine Betätigung des Pneumatikzylinders 14, welcher zentral unter dem Schleuderarm 2 befestigt sein kann,
kann der Manipulatorarm 12 in horizontaler Richtung durch
die Kolbenstange 17 des Pneumatikzylinders 14 verschoben werden und durch eine weitere Betätigung der Greifeinrichtung
13 über einen zweiten Pneumatikzylinder 16 kann eine in dem
Vorwärmeofen 1 sich befindende Muffel 5 herausgenommen und
an den Schmelzbehälter 4 angesetzt werden (siehe Fig. 1). In
diesem Falle dient die Greifeinrichtung 13 gleichzeitig auch
als Verbindungseinrichtung 9. Die Pneumatikzylinder können
doppelt oder einfach wirkend sein. Bei einfach wirkenden
Zylindern wird die Rückstellkraft statt über Druckluft durch
Federn bewirkt. Für die genannten Zwecke können handelsübliche Zylinder verwendet werden.

Wegen der auftretenden hohen Zentrifugalkräfte kann es von Vorteil sein, wenn der Pneumatikzylinder 14 auf der Seite des Schleuderarmes befestigt ist, die der Seite mit dem Schmelzbehälter 4 gegenüberliegt. Auf diese Weise wirkt während der Rotation auf den Kolben des Zylinders keine Kraft, die ihn aus dem Zylinder herauszieht.

Die Greifeinrichtung besteht aus zwei Klemmhebeln 18, zwischen denen der Pneumatikzylinder 16 angeordnet ist. Der Pneumatikzylinder 16 ist doppelt wirkend, d.h. mit zwei Kolbenstangen versehen und bewegt damit die beiden Klemmhebel 18 synchron. Am unteren Ende sind die beiden Klemmhebel 18 gelenkig mit dem vorderen Ende der Kolbenstange 17 verbunden, während die oberen Enden der beiden Klemmhebel 18 jeweils mit einem Halteglied 19 versehen sind. Wie aus der Fig. 3 ersichtlich ist, sind die beiden Halteglieder als Klemmbacken ausgebildet, deren Oberfläche gewölbt ist. Zur Verbindung mit den zu transportierenden Muffeln 5 müssen diese entsprechend angeordnete Gegenglieder 20 aufweisen, welche bei Verwendung von Klemmbacken 19 am Außenumfang der Muffel 5 angeordnete Ansätze sind. Die Ansätze 5 liegen sich dabei gegenüber und weisen auf ihren den Klemmbacken 19 zugewandten Flächen ebenfalls eine Krümmung bzw. Bogenform auf, die an die Form der Klemmbacken angepaßt ist. In der Fig. 4 ist rechts eine derartige Muffel 5 dargestellt. Statt Ansätze 5 sind auch in Umkehrung Einbuchtungen in der Muffel möglich. Eine andere Möglichkeit zur Verbindung der Muffel 5 mit der Greifeinrichtung 13 besteht darin, daß die oberen Enden der Klemmhebel 18 mit Haken versehen sind (nicht dargestellt), die in entsprechende Ösen 21 der Muffel 5 einführbar oder einrastbar sind. Eine Muffel mit Ösen 21 als Gegenglieder ist in der Fig. 5 links dargestellt.

Da im allgemeinen Muffeln unterschiedlicher Größe bzw. Durchmesser verwendet werden, ist es erforderlich, daß zum rationellen Fertigen und damit zum Gießen in kontinuierlich aufeinander folgenden Arbeitsgängen entsprechend Vorsorge dafür getroffen wird, daß sich die Längsmittelebene der Muffeln 5, an deren Bereich auch die Gegenglieder 20 liegen, sich auf dem gleichen Niveau befinden, damit die Greifeinrichtung 13 die aus dem Vorwärmeofen 1 zu entnehmenden Muffeln sicher greifen kann.

Hierzu ist nun ein Einsatz 22 in dem Vorwärmeofen 1 vorgesehen, welcher fest oder herausnehmbar sein kann. Der Einsatz 22 weist Auflageflächen 23 auf unterschiedlichen Höhen auf, und zwar derart, daß sich die auf die Auflageflächen 23 gelegten Muffeln auf einem gleichen Niveau befinden. In der Fig. 4 ist das Niveau mit "24" bezeichnet.

Damit alle Bewegungen des Manipulatorarmes 12 nahezu konstant sind und dieser lediglich eine geradlinige Bewegung auf gleichem Niveau ausführen muß, ist der Vorwärmeofen 1 auf der Vorderseite mit einer kreisbogenartigen Öffnung 25 versehen (s. Fig. 2). Der Radius der Öffnung 25 soll dabei wenigstens annähernd seinen Mittelpunkt auf der Achse der Antriebseinrichtung 3 und damit des Schleuderarmes 2 besitzen. Ebenso sind auch die Einsätze 22 mit ihren Auflageflächen 23 für die Muffeln 5 auszurichten. In diesem Falle sind die genannten Teile genau radial zur Drehachse des Schleuderarmes 2 ausgerichtet.

Auf der Seite mit dem Gegengewicht ist der Schleuderarm 2 mit Druckluftanschlüssen 15 versehen. Über die Druckluftanschlüsse 15, welche schnell lösbar mit einer nicht dargestellten Druckluftquelle verbindbar sind, kann das Innere 6 des Schleuderarmes 2 mit Druckluft versehen werden. Ebenso kann auch für einen Vakuumdruckguß ein Vakuum im Inneren erzeugt werden. Über die Druckluftanschlüsse werden auch die Pneumatikzylinder mit Druckluft versorgt. Statt einer Anordnung der Druckluftanschlüsse auf der Rückseite des Schleuderarmes kann eine Druckluftzuführung auch über die Antriebswelle des Schleuderarmes erfolgen. Dies kann dabei z.B. über bekannte pneumatische Drehübertrager erfolgen. Die erfindungsgemäße Vorrichtung funktioniert nun auf folgende Weise:

Aus dem Vorratsbehälter 7 wird eine abgepaßte Menge Zahnersatzmaterial in den Schmelzbehälter 4 eingeschoben. Anschließend wird die Widerstandsheizung betätigt und sobald das Gold geschmolzen ist, wird durch eine entsprechende Betätigung des Manipulatorarmes 12 bzw. der Pneumatikzylinder 14 und 16 eine vorgewärmte Muffel 5 aus dem Vorwärmeofen 1 herausgeholt und mit dem Schmelzbehälter 4 verbunden. Anschließend wird über die Druckluftanschlüsse 15 Druckluft im Inneren 6 des Schleuderarmes 2 erzeugt, die Verbindung mit der Druckluftquelle wird gelöst und der Schleuderarm 2 über die Antriebseinrichtung 3 in eine Rotationsbewegung versetzt. Auf diese Weise gelangt das geschmolzene Gold aus dem Schmelzbehälter 4 mit hoher Geschwindigkeit und unter Druck sehr genau in die Muffel 5.

Der Schleuderarm 2 wird abgebremst und die Verbindung der Muffel 5 mit dem Schmelzbehälter 4 gelöst, wodurch die Muffel in einen darunterliegenden Aufnahmebehälter fallen kann.

Anschließend wird eine neue Menge abgepaßten Zahnersatzmateriales in den Schmelzbehälter 4 eingeschoben, der Schleuderarm 2 wird um einen Takt so verdreht, daß der Manipulatorarm 12 wiederum durch eine einfache geradlinige Bewegung auf gleichem Niveau die nächste Muffel 5 aus dem Vorwärmeofen 1 holen kann, und der Vorgang wiederholt sich so lange, bis sich kein Zahnersatzmaterial mehr in dem Vorratsbehälter befindet.

0185287

PATENTANWALT

DIPL.-ING. WERNER LORENZ

Fasanenstr. 7

7920 Heidenheim

16.09.1985 - hf

Akte: KOE 1255G

Anmelder:

=========

Rudi Körner

Elisabethenstr. 41

7080 Aalen-Unterkochen

Patentansprüche:

1. Vorrichtung zum Gießen von Zahnersatzmaterialien, insbesondere von Gold, aus einem Schmelzbehälter in eine in einem Vorwärmeofen vorgewärmte Muffel, wobei der Schmelzbehälter zusammen mit der an diesen über eine Verbindungseinrichtung angesetzten Muffel an einem während des Gießvorganges rotierenden Schleuderarm einer Schleudereinrichtung angeordnet ist,

dadurch gekennzeichnet, daß

auf einer gemeinsamen Baueinheit (8) der Vorwärmeofen (1) und die Verbindungseinrichtung (9,13) so zueinander angeordnet sind, daß zum Transport der Muffel (5) und zu deren Befestigung an der Verbindungseinrichtung ein betätigbarer Manipulatorarm (12) vorgesehen ist, der nur eine Verschiebe-

- ... -

bewegung in einer Ebene durchführt und der an der Muffel angreift.

2. Vorrichtung nach Anspruch 1,

d a d u r c h   g e k e n n z e i c h n e t , daß

der Manipulatorarm (12) an dem Schleuderarm (2) befestigt und über einen oder mehrere Pneumatikzylinder (14,16) betätigbar ist.

3. Vorrichtung nach Anspruch 2,

d a d u r c h   g e k e n n z e i c h n e t , daß

der Schleuderarm (2) mit Druckmittelanschlüssen (15) zur Druckluftversorgung der Pneumatikzylinder (14,16) versehen ist.

4. Vorrichtung nach Anspruch 2 oder 3,

d a d u r c h   g e k e n n z e i c h n e t , daß

der Schleuderarm (2) wenigstens in dem Bereich, in dem der Schmelzbehälter (4) im Inneren angeordnet ist, als druckdicht verschließbarer Arm ausgebildet ist, wobei die Muffel (5) druckdicht mit dem Schmelzbehälter (4) verbindbar ist.

5. Vorrichtung nach einem der Ansprüche 2-4,

d a d u r c h   g e k e n n z e i c h n e t , daß

ein Pneumatikzylinder (14) für die horizontale Verschiebung des Manipulatorarmes (12) vorgesehen ist und ein weiterer Pneumatikzylinder (16) an einer Greifeinrichtung (13) für die Muffel (5) angreift.

6. Vorrichtung nach Anspruch 5,
d a d u r c h   g e k e n n z e i c h n e t , daß
die Greifeinrichtung (13) zangenartig mit zwei Klemmhebeln (18) ausgebildet ist, zwischen denen der doppelt-wirkende Pneumatikzylinder (16) zur Betätigung der beiden Klemmhebel angreift.

7. Vorrichtung nach Anspruch 6,
d a d u r c h   g e k e n n z e i c h n e t , daß
die Klemmhebel (18) mit Haltegliedern (19) versehen sind. die mit an der zu transportierenden Muffel (5) angeordnete Gegenglieder (20) zusammenarbeiten.

8. Vorrichtung nach einem der Ansprüche 1-7,
d a d u r c h   g e k e n n z e i c h n e t , daß
zum Transport von Muffeln (5) mit unterschiedlichen Durchmessern in dem Vorwärmeofen (1) ein Einsatz (22) mit unterschiedlich hohen Auflageflächen (23) für die Muffeln (5) derart angeordnet ist, daß sich alle Längsachsen der Muffeln (5) auf dem gleichen Niveau (24) befinden.

9. Vorrichtung nach Anspruch 8,
d a d u r c h   g e k e n n z e i c h n e t , daß

die Auflageflächen (23) auf einem Kreisbogen liegen, dessen Mittelpunkt wenigstens annähernd im Bereich der Drehachse des Schleuderarmes (2) liegt.

10. Vorrichtung nach Anspruch 7,
d a d u r c h   g e k e n n z e i c h n e t , daß
die Halteglieder Klemmbacken (19) und die Gegenglieder an die Außenkontur der Klemmbacken angepaßte Ansätze oder Einbuchtungen (20) in der Umfangswand der Muffel (5) sind.

11. Vorrichtung nach Anspruch 7,
d a d u r c h   g e k e n n z e i c h n e t , daß
die Halteglieder mit Haken versehen sind, die in als Ösen (21) ausgebildete Gegenglieder an der Muffel einführbar sind.

Fig.1

Fig.2

Fig.3

Fig.4

0185287

KÖ 1255 F

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP-A-0 087 354 (ARMINES) * Figur 1; Seite 3, Zeile 26 - Seite 4, Zeile 13; Seite 6, Zeilen 4-23 * | 1 | A 61 C 13/20 B 22 D 13/06 |
| Y | | 2-4 | |
| | --- | | |
| Y | DE-A-2 651 842 (DEUTSCHE GOLD- UND SILBERSCHEIDEANSTALT) * Figuren 1,2; Seite 7, Zeile 5 - Seite 8, Zeile 7 * | 2-4 | |
| | --- | | |
| A | DE-A-2 020 910 (BIOS GESELLSCHAFT H. BITTER) | | |
| | --- | | |
| A | CH-A- 394 481 (RIGATTI LUCHINI) | | RECHERCHIERTE SACHGEBIETE (Int Cl 4) |
| | ----- | | A 61 C B 22 D |

Der vorliegende Recherchenbericht wurde für alle Patentansprüche erstellt

| Recherchenort | Abschlußdatum der Recherche | Prüfer |
|---|---|---|
| DEN HAAG | 24-03-1986 | DEUTSCH J.P.M. |